# EUROPEAN PATENT APPLICATION

(11) **EP 1 544 437 A2**
(43) Date of publication of application: **22.06.2005**
(21) Application number: 04257778.3
(22) Date of filing: 15.12.2004
(51) Int. Cl.: F02C 7/224, F02C 7/22

(54) **Multi-stage fuel deoxygenator**

(30) Priority: 18.12.2003 US 739811
(71) Applicant: UNITED TECHNOLOGIES CORPORATION, Hartford, CT 06101 (US)
(72) Inventor: Cordatos, Harry, Colchester, Connecticut 06415 (US); Spadaccini, Louis J., Manchester, Connecticut 06040 (US); Vanderspurt, Thomas H., Glastonbury, Connecticut 06033 (US)
(74) Representative: Leckey, David H.

(57) **Abstract**

A fuel delivery system for an energy conversion device includes a fuel deoxygenator (22) and an oxygen scavenger module (24) for removing dissolved oxygen and increasing the usable cooling capability of a fuel. Fuel emerging from the fuel-deoxygenating device (22) flows into the oxygen-scavenging modu le (24) where a second portion, smaller than the first portion of oxygen is removed from the fuel. The combination of the oxygen scavenger (24) and the fuel deoxygenator (22) provides an increase in removal of dissolved oxygen relative to the use of either device alone. The combination provides the desired increase in deoxygenation of fuel without the corresponding increase in device size.

## Description

### BACKGROUND OF THE INVENTION

This invention generally relates to a fuel delivery system for an energy conversion device, and specifically to a fuel delivery system including a fuel deoxygenator and an oxygen scavenger module for removing dissolved oxygen to increase the usable cooling capability of a fuel.

A gas turbine engine is an energy conversion device typically used in aircraft and in power generation applications. A gas turbine engine typically includes a compressor, a combustor and a turbine. Air entering the compressor is compressed and directed toward a combustor. Fuel is combined with the high-pressure air and ignited. Combustion gases produced in the combustor drive the turbine.

It is common practice to use fuel as a cooling medium for various systems onboard an aircraft. The usable cooling capacity of a particular fuel is limited by the formation of insoluble products referred to as "coke". The formation of coke deposits is dependent on the amount of dissolved oxygen present within the fuel due to prior exposure to air. Reducing the amount of oxygen dissolved within the fuel decreases the rate of coke deposition and increases the maximum allowable temperature.

United States Patents 6,315,815, and 6,709,492 assigned to Applicant, disclose devices for removing dissolved oxygen using a gas-permeable membrane disposed within the fuel system. As fuel passes along the permeable membrane, oxygen molecules in the fuel diffuse out of the fuel across the gas-permeable membrane. An oxygen partial pressure differential across the permeable membrane drives oxygen from the fuel, which is unaffected and passes over the membrane.

Another fuel deoxygenating device utilizes a catalytic material exposed to fuel flow. The catalytic material initiates reactions with components of the fuel to prevent dissolved oxygen from combining with other elements within the fuel and form coke-producing products. The catalytic material causes formation of components less likely to form coke-precursors within the fuel delivery system.

It is also known to remove dissolved oxygen from fuels with the use of oxygen scavengers. Oxygen scavengers are inorganic materials for removing dissolved oxygen. Oxygen scavengers are mostly inert materials that are non-toxic, non-flammable and easily regenerated. However, the quantity of oxygen scavenging material required for fuel de-oxygenation aboard an aircraft is impractical.

The more dissolved air that can be removed from the fuel the greater the fuel temperature before coke deposits form, and the greater usable cooling capacity available. Disadvantageously, the size of a fuel deoxygenator increases disproportionably with the requirements for removing oxygen. An increase in oxygen removal from 90% to 99% requires nearly a doubling of deoxygenator size. As appreciated, space aboard an aircraft is limited and any increase in device size affects overall configuration and operation.

Accordingly, it is desirable to develop a fuel delivery system for a gas turbine engine that removes dissolved oxygen for increasing the usable cooling capability of a fuel without requiring substantial amounts of additional space.

### SUMMARY OF INVENTION

This invention provides, in one aspect, a fuel delivery system for an energy conversion device including a fuel deoxygenator and an oxygen scavenger module for removing dissolved oxygen and increasing the usable cooling capability of a fuel.

The preferred fuel delivery system of this invention includes a fuel deoxygenator and an oxygen scavenger module. Fuel flowing though the fuel delivery system flows through the fuel-deoxygenating device. The fuel-deoxygenating device removes a first portion of oxygen from the fuel. Fuel emerging from the fuel-deoxygenating device flows into the oxygen-scavenging module where a second portion, smaller than the first portion of oxygen is removed from the fuel.

Fuel emerging from the oxygen scavenger is substantially free of any dissolved oxygen. The substantially oxygen free fuel is flowed through a heat exchanger for absorbing heat from another system. The removal of dissolved oxygen increases the exploitable cooling capacity of the fuel. This provides for increased engine temperature that in turn increases overall engine efficiency.

The combination of the oxygen scavenger and the fuel deoxygenator provides for an increase in removal of dissolved oxygen relative to the use of either device alone. The size of a fuel deoxygenator or oxygen scavenger module capable of removing the proportion of dissolved air removed by the combination is not optimal. The combination provides the desired increase in deoxygenation of fuel without the corresponding increase in device size.

Accordingly, the fuel delivery system of this invention provides for the removal of increased amounts of dissolved oxygen, resulting in increased usable cooling capability of fuel without requiring substantial amounts of additional space.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a schematic view of an energy conversion assembly and fuel delivery system according to this invention;
Figure 2 is a schematic view of a fuel deoxygenator according to this invention;
Figure 3 is a schematic view of another fuel deoxygenator according to this invention;
Figure 4 is a cross-sectional view of a permeable membrane according to this invention;
Figure 5 is a schematic view of another fuel deoxygenator according to this invention including catalytic material; and
Figure 6, is a schematic view of an oxygen-scavenging module according to this invention.

### DETAILED DESCRIPTION OF THE PREFERRED EMBODIMENT

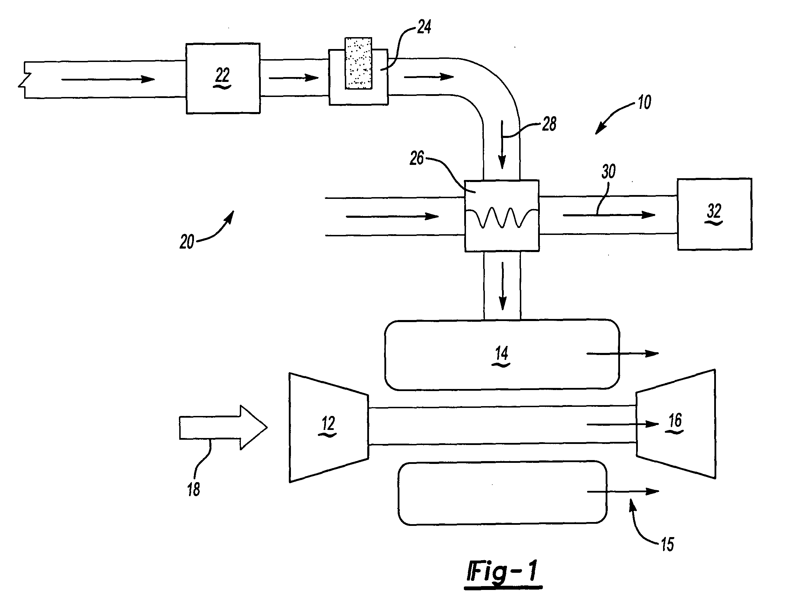

Referring to Figure 1, a gas turbine engine assembly 10 includes a compressor 12, a combustor 14 and a turbine 16. Airflow 18 entering the compressor 12 is compressed to a high pressure and directed towards the combustor 14. In the combustor 14, fuel is mixed with the high-pressure air and ignited. Resulting hot combustion gases 15 exhausted from the engine 10 drive the turbine 16. Fuel is delivered to the combustor 14 through a fuel delivery system 20. Although a gas turbine engine 10 is shown, other energy conversion assemblies known to a worker skilled in the art would benefit from application of this invention. The fuel delivery system 20 of this invention includes a fuel deoxygenator 22 and an oxygen scavenger module 24.

The fuel system 20 also includes a heat exchanger 26 for rejecting heat from other systems, schematically shown at 32 to fuel 28. The other system can include cooling of cooling air or other fluids circulated through the engine 10. The specific cooling requirement dictates the configuration of the heat exchanger 26. A worker skilled in the art with the benefit of this disclosure would understand how to configure the heat exchanger 26 and fuel system 20 to utilize the increased cooling capacity of fuel provided by this invention.

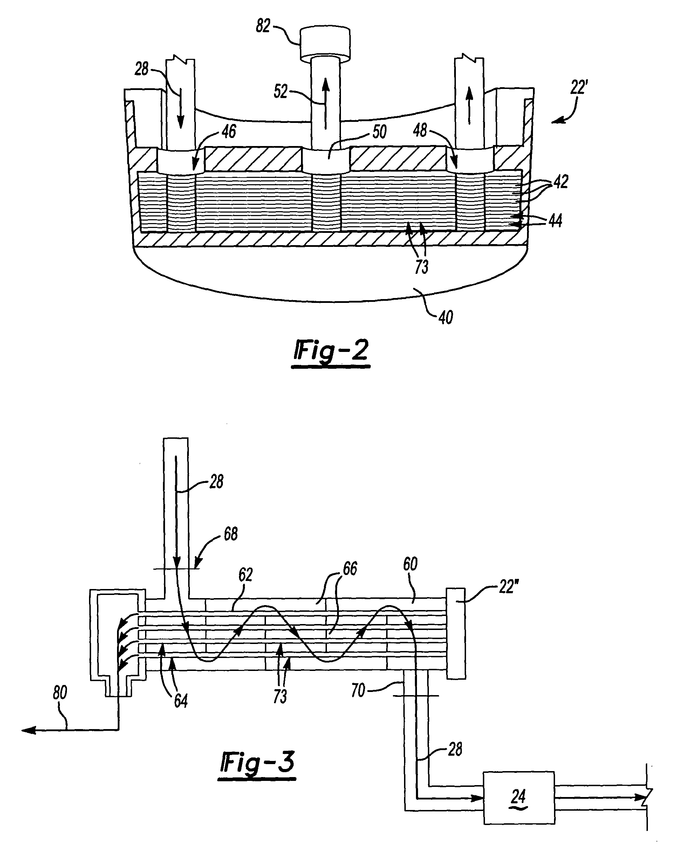

Referring to Figure 2, a fuel deoxygenating device 22' according to this invention includes a housing 40 defining a fuel inlet 46 and outlet 48. A plurality of fuel plates 42 are stacked within the housing 40 to define fuel passages 44. The fuel plates 42 include a composite permeable membrane 73. A vacuum outlet 50 is in communication with the fuel plates 42 and a vacuum source 82. Fuel containing dissolved oxygen enters the inlet 46 and flows through the fuel passages 44. Oxygen within the fuel diffuses through the composite permeable membrane 73 under the driving force of an oxygen partial pressure differential created by the vacuum 82. Oxygen 52 removed from the fuel flow is exhausted and flows out the vacuum outlet 50.

Referring to Figure 3, another fuel deoxygenating device 22" according to this invention includes a housing 60 defining a fuel inlet 68 and a fuel outlet 70. A plurality of tubular members 62 are arranged within the housing 60 and provide passages 64 for a strip gas 80. Fuel entering the housing 60 flows over and around the tubular members 62. Each tubular member 62 includes the composite permeable membrane 73 that draws oxygen from the fuel and into the passages 64. The strip gas 80 flows through the passages 64 to create an oxygen partial pressure differential across the permeable membrane 73. The partial pressure differential drives the oxygen from the fuel and through the permeable membrane 73. The removed oxygen is then exhausted from the device 22" and removed from the strip gas.

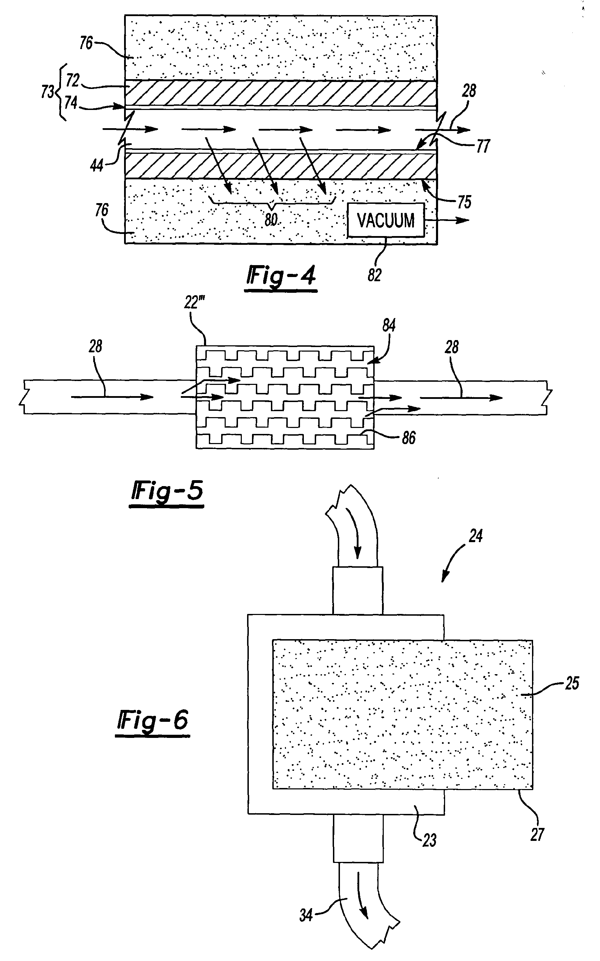

Referring to Figure 4, the composite permeable membrane 73 is shown in cross-section and preferably includes a permeable layer 74 disposed over a porous backing 72. The porous backing 72 supplies the required support structure for the permeable layer 74 while still allowing maximum oxygen diffusion from fuel. The permeable layer 74 is coated on to the porous backing 72 and a mechanical bond between the two is formed. The permeable layer 74 is preferably a 0.5-20 µm thick coating of Teflon AF 2400 over a 0.005-in (0.127 mm) thick porous backing 72 of polyvinylidene fluoride (PVDF) with a 0.25 µm pores size. Other supports of different material, thickness and pore size can be used that provide the requisite strength and openness. Preferably the permeable layer 74 is Dupont Telfon AF Amorphous Fluoropolymer, however other materials known to workers skilled in the art are within the contemplation of this invention, such as Solvay Hyflon AD perfluorinated glassy polymer and Asahi Glass CYTOP polyperfluorobutenyl vinyl ether. Each composite permeable membrane 73 is supported on a porous substrate 76. The porous substrate 76 is in communication with the vacuum source 82 to create an oxygen partial pressure differential across the composite permeable membrane 73.

In operation a partial pressure differential is created by the vacuum source 82 between a non-fuel side 75 of the permeable membrane 73 and a fuel side 77. Oxygen indicated at arrows 80 diffuses from fuel 28 across the composite permeable membrane 73 and into the porous substrate 76. From the porous substrate 76 the oxygen 80 is pulled and vented out of the fuel system.

Referring to Figure 5, another fuel deoxygenator 22"' according to this invention is schematically shown and includes a catalytic material 84 supported on a support structure 86 within the flow of fuel 28. The catalytic material 84 promotes reactions with components within the fuel that are less likely to form coke-producing products. The catalytic material 84 can be a metal such as copper, nickel, chromium, platinum, molybdenum, rhodium, iridium, ruthenium, palladium, and any combination of these materials. Further, the catalytic material 36 may also be a zeolite. A worker having the benefit of this disclosure would understand the specific composition of catalyst required to consume dissolved oxygen without forming coke precursors.

Preferably, the catalytic material 84 is supported on a honeycomb structure 86 disposed within the fuel deoxygenator 22"'. However, the catalytic material may be supported on granules, extrudates, monoliths, or other known catalyst support structures.

Although embodiments of fuel deoxygenators 22 are shown and described, a worker skilled in the art with the benefit of this application would understand that other configurations of fuel deoxygenators are within the contemplation of this invention.

The size of the fuel-deoxygenating device 22 is dependent on the amount of oxygen removal required. The size of the fuel-deoxygenating device 22 increases disproportionately with increases in oxygen removal demands. For example, increasing the percent removal of oxygen from 90% to 99% would require substantially a doubling in size of the fuel-deoxygenating device 22. This is so because as oxygen is removed from the fuel, the oxygen pressure differential decreases exponentially. This decrease in available oxygen pressure differential reduces the amount of oxygen that can be removed with the fuel deoxygenator 22.

The fuel delivery system of this invention combines the fuel deoxygenator 22 with the oxygen scavenger module 24. The oxygen scavenger module 24 is disposed within the fuel flow 28 after the fuel deoxygenator 22 to remove remaining oxygen within the fuel.

Referring to Figure 6, the oxygen scavenger module 24 includes a housing 23 that receives a module 27 containing an oxygen absorbent material 25. Oxygen absorbent materials are known for use in removing oxygen from solutions and containers. Oxygen absorbent material removes oxygen by initiating reactions with oxygen present to form inert products. The oxygen absorbent material 25 may be of any type known to a worker skilled in the art. For example, oxygen-scavenging polymers in the form of bead material, or salts bonded to a support structure disposed within the fuel stream. A worker with the benefit of this disclosure would understand that the selection of oxygen scavenging material is application dependent and the use of any known oxygen scavenging materials are within the contemplation of this invention.

Oxygen absorbent materials are typically inert, non-toxic, non-flammable and regenerable. The disadvantage being that large quantities are required for the removing oxygen in sufficient quantities from fuel to prevent undesirable coking. The oxygen-scavenging module 24 is therefore placed after the fuel-deoxygenating device 22 to remove only a portion of oxygen from the fuel.

Preferably, the oxygen-scavenging module 24 includes a sufficient amount of oxygen absorbent material to remove approximately 10% of oxygen contained with fuel. The fuel-deoxygenating device 22 is configured to remove approximately 90% of the dissolved oxygen. Accordingly, the amount of oxygen absorbent material 25 required is small enough to be practically installed within the module 27 that can be replaced after a desired duration of operation. For example, removing 10% of the dissolved oxygen from a fuel system flowing 1000 gallons/hour must absorb approximately 425 grams of oxygen every 20 hours. 10 kilograms of oxygen absorbent material would be required to remove the desired amount of oxygen. As appreciated, this is an example and a worker with the benefit of this disclosure would understand how to determine the amount of sorbent material required for a specific application.

Referring to Figure 1, in operation, fuel flowing though the fuel delivery system 20 flows through the fuel-deoxygenating device 22. The fuel-deoxygenating device 22 includes a partial oxygen pressure differential across the permeable membrane 73 (Figure 4) that draws out a first portion of oxygen 80 from the fuel 28. Fuel emerging from the fuel-oxygenating device 22 flows into the oxygen-scavenging module 24 where a second portion, smaller than the first portion of oxygen is removed from the fuel 28. Fuel emerging from the oxygen scavenger 24 can then be routed through a heat exchanger 26 or other heat transfer device to absorb heat. The removal of dissolved oxygen from the fuel increases the exploitable cooling capacity of the fuel. This provides for increased engine temperatures that in turn increase overall efficiency of operating the engine.

The foregoing description is exemplary and not just a material specification. The invention has been described in an illustrative manner, and should be understood that the terminology used is intended to be in the nature of words of description rather than of limitation. Many modifications and variations of the present invention are possible in light of the above teachings. The preferred embodiments of this invention have been disclosed, however, one of ordinary skill in the art would recognize that certain modifications are within the scope of this invention. It is understood that within the scope of the appended claims, the invention may be practiced otherwise than as specifically described. For that reason the following claims should be studied to determine the true scope and content of this invention.

## Claims

1. An energy conversion assembly comprising:
a fuel delivery system comprising a fuel deoxygenator (22; 22'; 22"; 22"') for removing a first portion of oxygen from fuel and an oxygen scavenger module (24) in series with said fuel deoxygenator for removing a second portion of oxygen from the fuel.

2. The assembly as recited in claim 1, wherein said energy conversion assembly comprises a gas turbine engine (10) including a compressor (12) to comp ress intake air, a combustor (14) to combust fuel with compressed intake air and a turbine section (16) comprising a rotating turbine in flow communication with said combustor.

3. A fuel delivery system comprising:
a fuel deoxygenator (22; 22'; 22"; 22"') for removing a first portion of dissolved oxygen to increase the heat absorption capacity of a fuel; and
an oxygen scavenger module (24) for removing a second portion of dissolved oxygen from fuel exiting said fuel deoxygenator.

4. The assembly or system as recited in any preceding claim, wherein said fuel deoxygenator (22; 22'; 22") comprises a permeable membrane (73) in contact with fuel flowing through a fuel passage.

5. The assembly or system as recited in claim 4, comprising a polytetrafluorothylene coating (74) disposed on a fuel side of said permeable membrane (73).

6. The assembly or system as recited in claim 4 or 5 comprising a porous substrate (76) supporting said permeable membrane (73) on a non-fuel side.

7. The assembly or system as recited in claim 6, comprising a vacuum source (82) in communication with said porous substrate (76) for creating a partial pressure differential between a fuel side of said permeable membrane (73) and a non-fuel side to draw dissolved oxygen out of the fuel.

8. The assembly or system as recited in claim 6, comprising a strip gas passage (64) in communication with said porous substrate (76) for creating a partial pressure differential between a fuel side of said permeable membrane (73) and a non-fuel side to draw dissolved oxygen out of the fuel.

9. The assembly or system as recited in any of claims 1 to 3, wherein said fuel deoxygenator (22"') comprises catalytic material (84) for reacting with oxygen within said fuel.

10. The assembly or system as recited in claim 9, wherein said catalytic material (84) initiates reactions with said fuel to produce non-coke forming products.

11. The assembly or system as recited in any preceding claim, wherein said oxygen scavenger module (24) comprises an oxygen sorbent material (25).

12. The assembly or system as recited in claim 11, wherein said oxygen sorbent material (25) is regenerable.

13. The assembly or system as recited in claim 11 or 12, wherein said oxygen sorbent material (25) comprises a polymer.

14. The assembly or system as recited in claim 11, 12 or 13, wherein said oxygen scavenger module (24) comprises a replaceable portion containing said oxygen sorbent material (25).

15. The assembly or system as recited in any preceding claim 1, wherein said fuel deoxygenator (22; 22'; 22"; 22"') removes a greater amount of dissolved oxygen from said fuel than said oxygen scavenger module (24).

16. A method of inhibiting coke formation of a fuel for an energy conversion device comprising the steps of:
a) removing a first quantity of dissolved oxygen from fuel with a first fuel deoxygenating device (22; 22'; 22"; 22"'); and
b) removing a second quantity of dissolved oxygen from the fuel with a second fuel deoxygenating device (24).

17. The method as recited in claim 16, wherein said step b) comprises flowing fuel adjacent an oxygen sorbent material (25).

18. The method as recited in claim 17, comprising supporting a permeable membrane (73) on a non-fuel side with a porous substrate (76) and creating a partial pressure differential between a fuel side and the non-fuel side of said permeable membrane (73) for diffusing oxygen from the fuel.

19. The method as recited in claim 16, comprising exposing the fuel to a catalytic material (84) and initiating reactions inhibiting formation of coke-forming products.

20. The method as recited in claim 17, comprising filling a replaceable module with the oxygen sorbent material (25) and placing the module adjacent fuel flow.

21. The method as recited in any of claims 16 to 20, removing a greater amount of dissolved oxygen with the first fuel deoxygenator (22; 22'; 22"; 22"') than with the second fuel deoxygenator (24).
